# EUROPEAN PATENT SPECIFICATION

(11) **EP 4 189 940 B1**
(45) Date of publication and mention of the grant of the patent: **12.08.2026**
(21) Application number: 20750254.3
(22) Date of filing: 31.07.2020
(51) Int. Cl.: H04L 47/10, H04L 47/25, H04W 28/02, H04W 28/12

(54) **CONTROL MECHANISM FOR ENHANCING COMMUNICATION RELIABILITY**
STEUERUNGSMECHANISMUS ZUR VERBESSERUNG DER KOMMUNIKATIONSZUVERLÄSSIGKEIT
MÉCANISME DE COMMANDE POUR AMÉLIORER LA FIABILITÉ DE COMMUNICATION

(43) Date of publication of application: 07.06.2023
(73) Proprietor: Nokia Technologies Oy, 02610 Espoo (FI)
(72) Inventor: ISOMÄKI, Markus Sakari, 02210 Espoo (FI); LI, Zexian, 02610 Espoo (FI); ANDRÉS MALDONADO, Pilar, 9000 Aalborg (DK)
(74) Representative: Mudge, Kevin
(86) International application number: PCT/EP2020/071664
(87) International publication number: WO 2022/022835

(56) References cited:
- US-A1- 2017 201 440
- "3rd Generation Partnership Project; Technical Specification Group Services and System Aspects; Study on enhanced support of Industrial Internet of Things (IIoT) in the 5G System (5GS) (Release 17)", no. V0.4.0, 29 June 2020 (2020-06-29), pages 1 - 58, XP051924138, Retrieved from the Internet <URL:ftp://ftp.3gpp.org/Specs/archive/23_series/23.700-20/23700-20-040.zip 23700-20-v040-rm.docx> [retrieved on 20200629]

## Description

### BACKGROUND

### Field

Examples of embodiments relate to apparatuses, methods, systems, computer programs, computer program products and (non-transitory) computer-readable media usable for enhancing reliability of communications in a communication network, such as a wireless communication network based on 3GPP standards, and in particular to apparatuses, methods, systems, computer programs, computer program products and (non-transitory) computer-readable media usable for avoiding failure conditions, such as application layer downtime situations, caused by failed packet transmission.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GS: 5G system
- ACK: acknowledgement
- AMF: access and mobility function
- AN: access network
- AP: application protocol
- API: application programming interface
- BS: base station
- CN: core network
- CNC: centralized network configuration
- CP: control plane
- CPU: central processing unit
- E2E: endpoint to endpoint
- eNB: evolved node B
- ETSI: European Telecommunications Standards Institute
- FRER: frame replication and elimination for reliability
- gNB: next generation node B
- GPRS: general packet radio service
- GTP: GPRS tunnel protocol
- ID: identifier, identification
- IEEE: Institute of Electrical and Electronics Engineers
- IloT: industrial Internet of things
- KPI: key performance indicator
- LTE: Long Term Evolution
- LTE-A: LTE Advanced
- NF: network function
- NG: new generation
- NGAP: next generation application protocol
- NW: network, network side
- PDU: packet data unit
- PFS: packet filter set
- PHY: physical layer
- QFI: QoS flow ID
- QoS: quality of service
- RAN: radio access network
- SDAP: service data adaptation protocol
- TEID: tunnel endpoint ID
- TSC: time sensitive communication
- TSN: time sensitive networking
- UE: user equipment
- UMTS: universal mobile telecommunication system
- UP: user plane
- UPF: user plane function
- URLLC: ultra reliable low latency communications

US20170201440A1 discloses dissemination of quality of service information in a distributed environment.

### SUMMARY

In accordance with the present invention, there is provided methods and a corresponding communication network element or function, system and computer program as claimed in the accompanying claims.

### BRIEF DESCRIPTION OF THE DRAWINGS

Some embodiments of the present disclosure are described below, by way of example only, with reference to the accompanying drawings, in which:
Fig. 1 shows a diagram illustrating an example of a communication network in which a problem during packet transmission occurs;
Fig. 2 shows a diagram explaining survival time versus message loss;
Fig. 3 shows a diagram illustrating an example of a communication network in which a communication control procedure according to some embodiments of the invention is applied;
Fig. 4 shows a signaling diagram illustrating a procedure for communication control according to some examples of embodiments;
Fig. 5 shows a diagram illustrating another example of a communication network in which a communication control procedure according to some embodiments of the invention is applied;
Fig. 6 shows a flow chart of a processing conducted in a communication network element or function acting as communication network control network element or function according to some examples of embodiments; and
Fig. 7 shows a diagram of a network element or function representing a communication network control element or function according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Basically, for properly establishing and handling a communication between two or more endpoints (e.g. communication stations or elements, such as terminal devices, user equipments (UEs), or other communication network elements, a database, a server, host etc.), one or more network elements or functions (e.g. virtualized network functions), such as communication network control elements or functions, for example access network elements like access points, radio base stations, relay stations, eNBs, gNBs etc., and core network elements or functions, for example control nodes, support nodes, service nodes, gateways, user plane functions, access and mobility functions etc., may be involved, which may belong to one communication network system or different communication network systems. However, it is to be noted that also a communication without intermediate network element is basically possible.

New communication systems, such as the 5G System (5GS), are developed in order to support new business models such as those for IloT and enterprise managed networks. Services such as unmanned aerial vehicle control, augmented reality, and factory automation are intended to be provided. Network flexibility enhancements support self-contained enterprise networks, installed and maintained by network operators while being managed by the enterprise. Enhanced connection modes and evolved security facilitate support of massive IloT, expected to include tens of millions of UEs sending and receiving data over the 5G network.

That is, for 5G applications, especially considering such which are not supported by traditional telecommunication operators, there are many new applications/services from different vertical domains such as factory automation, building automation, autonomous driving, audio/video production etc. In order to enable those services/application, mechanisms such as URLLC and TSC are planned to be employed which are seen to be key enablers to support the existing applications and new emerging ones.

As indicated above, one use case is factory automation which is also referred to as vertical industries (i.e. Industry 4.0). Vertical industries are related to e.g. discrete automation, process automation, and intelligent transport systems in industrial factories or the like. Design principles concern several aspects, such as, for example, interconnection, i.e. the ability of machines, devices, sensors, and people to connect and communicate with each other via IloT, information transparency, i.e. the provision of operators with useful information needed to make appropriate decisions from all points in the manufacturing process, technical assistance, i.e. the ability of assistance systems to support humans by aggregating and visualizing information comprehensively for making informed decisions and solving urgent problems on short notice, and the ability of cyber physical systems to physically support humans by conducting a range of tasks, and decentralized decisions, i.e. the ability of cyber physical systems to make decisions on their own and to perform their tasks as autonomously as possible.

Cyber-physical systems are to be understood as systems that include engineered, interacting networks of physical and computational components. Cyber-physical control applications are to be understood as applications that control physical processes. Cyber-physical control applications in automation follow certain activity patterns, which are open-loop control, closed-loop control, sequence control, and batch control.

Open-loop control refers to a scheme whose salient aspect is the lack of feedback from the output to the control; when providing commands to an actuator, it is assumed that the output of the influenced process is predetermined and within an acceptable range. This kind of control loop works if the influences of the environment on process and actuator are negligible. Also, this kind of control is applied in case unwanted output can be tolerated. Closed-loop control, on the other hand, enables the manipulation of processes even if the environment influences the process or the performance of the actuator changes over time. This type of control is realized by sensing the process output and by feeding these measurements back into a controller. Sequence control may either step through a fixed sequence or employ logic that performs different actions based on various system states and system input. In batch control, batch processes lead to the production of finite quantities of material (batches) by subjecting input materials to a defined order of processing actions by use of one or more pieces of equipment.

In order to be suitable for automation in vertical domains, communication systems such as 5G systems need to be dependable and flexible to meet specific KPIs to serve specific applications and use cases. They need to come with the system properties of reliability, availability, maintainability, safety, and integrity. What particular requirements each property needs to meet depends on the particularities of the domain and the use case.

Communication service availability is considered an important service performance requirement for cyber-physical applications, especially for applications with deterministic traffic. Although the communication service availability cannot be directly measured by the network, the communication service availability requirement is the combination of latency, survival time (described later) and reliability requirement for 5G system, because the system is considered unavailable to the cyber-physical application when an expected message is not received (e.g. transfer time (actual latency) is greater than the maximum end-to-end latency) by the application after application's survival time expires.

Communication services supporting cyber-physical control applications need to be ultra-reliable, dependable with a high communication service availability, and often require low or (in some cases) very low end-to-end latency. Communication in automation in vertical domains follows certain communication patterns. One example for such a communication pattern is a periodic deterministic communication.

As described above, communication systems employed in applications like vertical industries have to fulfill certain requirements, such as high communication service availability and low end-to-end latency. In order to provide such capabilities, mechanisms for Time Sensitive Networking (TSN) as defined by IEEE are integrated with 5GS. TSN is currently standardized as the mechanism for communication within industrial networks. A set of IEEE 802.1 protocols (IEEE 802.1AS-Rev, 802.1CB, 802.1Qcc, 802.1Qch, 802.1Qci, 802.1Qcj, 802.1CM, 802.1Qcp, 802.1Qcr, 802.1AB) is applied to achieve deterministic data transmission.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

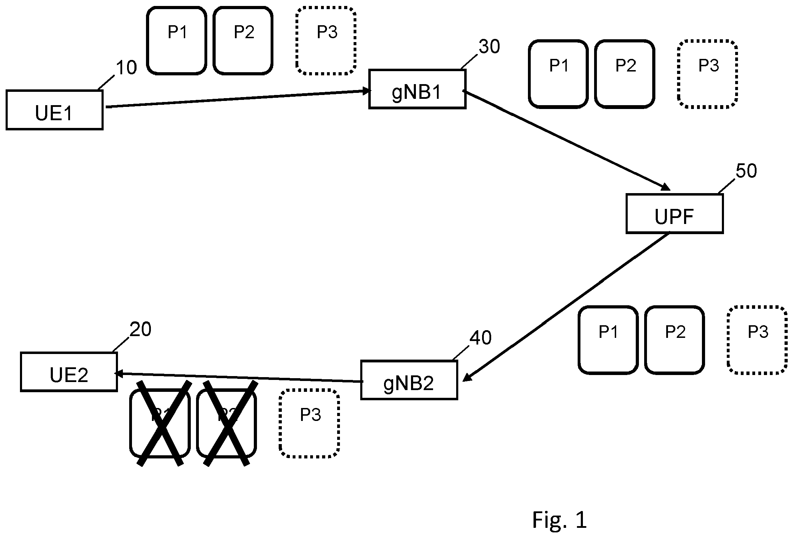

Fig. 1 shows a diagram illustrating an example of a communication network representing one example of a system architecture for a vertical scenario as indicated above.

As shown in Fig. 1, a communication element such as a UE (UE1) 10 and another UE (UE2) 20 are communicating with each other, wherein, for example, an application runs on UE2 20 requiring data input from UE1 10 . UE1 10 is connected to a communication network via a RAN or access network (AN) formed by a gNB (gNB1) 30 as one example of a communication network control element or function, while UE2 20 is connected to the communication network via a RAN or access network (AN) formed by another gNB (gNB2) 40 as an example of a communication network control element or function.

The gNBs 30 and 40 are connected to a core network of the communication network. In Fig. 1, while the core network usually comprises various elements or NFs, such as an application management function (AMF), a session management function (SMF), a policy control function (PCF), a network exposure function (NEF), a user data management (UDM), etc., only one user plane function (UPF) 50 is illustrated, in order to illustrate a user plane communication path.

In Fig. 1, it is assumed that the UE1 10 represents an ingress point (UL communication direction) for the communication path which represents the connection between the endpoints represented by UE1 and UE 2. That is, in Fig. 1, a traffic flow is assumed to be directed from UE1 to UE2, wherein links between the respective network elements or functions (i.e. UE1->gNB1->UPF->gNB2->UE2) are used as a one-hop communication connection for data transmission.

It is to be noted that the system configuration and communication path indicated in Fig. 1 represents only an example for illustrative purposes. It is evident that also other system configurations and communication paths can be applied in a similar manner.

In current developments of communication networks, such as for 3GPP based networks, service requirements from various vertical domains are developed. One example for such a requirement is survival time. For example, survival time can be provided from application or management layer to the network together with other Quality of Service requirements related to a particular traffic flow.

Survival time is defined, for example, as an indication, to a communication service, of the time available to recover from failure. The survival time can be expressed as a time period or, especially with cyclic traffic, as maximum number of consecutive lost or otherwise incorrectly received application messages. For example, one reason for incorrect reception is that the message is delayed in the network beyond required arrival time. That is, survival time can be expressed as maximum allowed consecutive message loss. On the network, application messages are carried by individual packets (such as an IP packet or an Ethernet frame) or bursts of packets in case the message size exceeds maximum packet size. In the new developed systems, survival time represents on example of an important influential quality parameter.

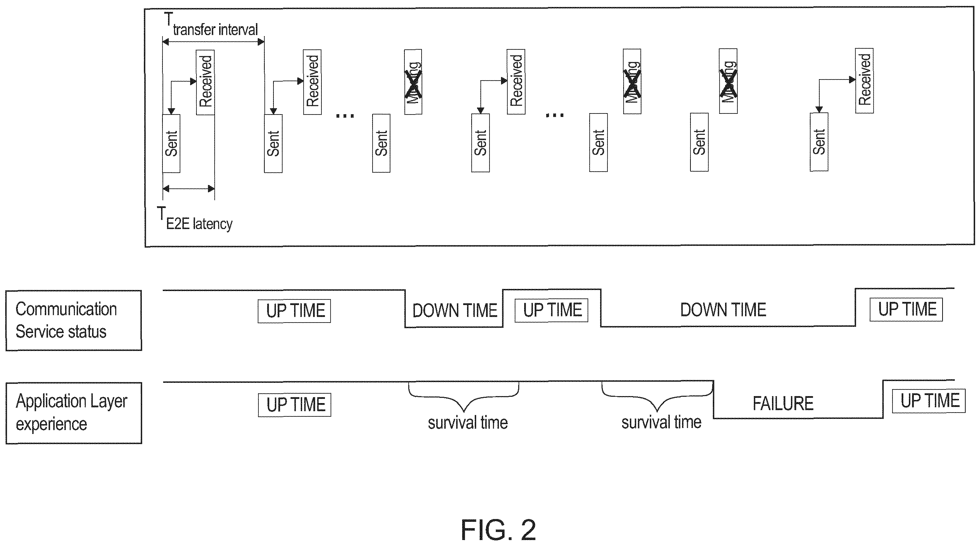

For illustrating the concept of the survival time, reference is made to Fig. 2 which shows a diagram explaining survival time versus message loss. Specifically, Fig. 2 shows an example for a periodic communication which is illustrated in the upper part of Fig. 2. The application delivers messages to the ingress of the communication system at a given transfer interval. When the messages are correctly received (indicated in the upper part of Fig. 2 as "received"), it is labelled as "UP TIME" of the communication service as well as "UP TIME" from the application layer's perspective. On the other hand, incorrectly received or lost messages (indicated in the upper part of Fig. 2 as "missing") lead to a "DOWN TIME" in the communication status and the application layer experience. In practice, if there is no message correctly received within the receiving window (e.g., based on the transfer interval and the latency), it will be considered as per message network down time.

If that down time is within the limit of the (pre-defined) survival time (see lower part of Fig. 2) such transmission errors can be compensated by the application. A communication service failure occurs when more consecutive messages are lost than the survival time allows, which also leads to a failure on the application layer. In an application layer failure situation, the application might need for instance to stop the physical machine or process the application is controlling which would have to be restarted again after the communication service has recovered. It is to be noted that Fig. 2 illustrates a case where one message is contained in one packet.

The benefit of knowing the survival time in the network (or a network element) is that the network can take extraordinary measures to correctly deliver packets whose loss will escalate to application layer failure. For instance, in Fig. 2 (where a maximum number of consecutive lost messages is 1), if one packet is lost, the very next packet would be treated with especially high priority even at the expense of other traffic, including even traffic which would otherwise have equal priority.

In current communication networks, such as 5GS, survival time is considered currently for one link at a time, such as a radio link between UE and gNB in Fig. 1. Specifically, in wireless communication systems, such as in 5GS, the radio link between a UE and a gNB is considered the weakest link on the network path with regard to the risk that packet loss or delay is introduced. In a simple UE-to-network communication scenario, there is only one such weak link on the path, and knowledge of packet losses and threat of failing the survival time can be managed locally on that link. However, in more complex scenarios, such as in a UE-to-UE communication as shown in Fig. 1, there are at least two such weak links on the path. However, conventionally, there is no knowledge in the first link about losses introduced by the second link so that there is no way to act correspondingly.

This problem is explained in further detail with regard to Fig. 1. Here, it is assumed that the communication flow between UE1 10 and UE2 20 includes a transmission of consecutive packets, indicates as P1 to P3 in Fig. 1. Moreover, it is assumed that the survival time which is expressed as a maximum number of consecutive packet errors, for example, for the application running on UE2 20 is not allowing losing 3 consecutive packets. That is, in addition to actually dropped packets, also any packet which is delayed more than the end-to-end maximum latency requirement is considered as lost.

Supposing the survival time is applicable to the link between UE1 10 and gNB1 30, and also to the link between UE2 20 and gNB2 40. In the example error case shown in Fig. 1, considering the communication from UE1 to UE2, an emergency event at application layer is claimed in case three consecutive packets are lost.

It is to be noted that the emergency event may affect the overall process related to the application in question; for example, the equipment associated with UE2 could be damaged, for example when a transport device is controlled on the basis of the application.

In the example shown in Fig. 1, it is assumed that the first two packets are successfully delivered from UE1 10 as far as gNB2 (indicated by solid boxed for P1 and P2, but these packets are failed to be delivered to UE2 20 (indicated by crossed-out boxes for P1 and P2 in Fig. 1).

In this situation, based on settings for survival time regarding the link between UE2 20 and gNB2 40, it can be assumed that measures are taken in order to make sure the third packet (P3) is delivered successfully once it comes to gNB2 40.

However, the problem is that neither gNB1 30 nor UE1 10 is aware of the situation. That is, for packet P3, which is the third packet in the consecutive order of packets, no special measure is taken e.g. in the link between UE1 10 and gNB1 30.

That is, in case the transmission of packet P3 from UE1 10 fails, gNB1 30 is not able to send any packet further. In another words, the third packet is lost from UE2, gNB2 and UPF point of view (indicated in Fig. 1 by the dotted box of P3), in particular at UE2 20. Therefore, since in total three consecutive packets are lost, survival time is expired, and the application running on UE2 20 declares an emergency (application layer downtime in Fig. 2).

In view of the above, according to examples of embodiments, measures are suggested allowing to avoid such a situation. For example, examples of embodiments are related to a processing which enhances reliability of communications in a communication network, such as a wireless communication network based on 3GPP standards like that shown in Fig. 1, so that failure conditions as indicated above, which are caused by failed packet transmission or the like, are avoided. Specifically, examples of embodiments are related to consider the survival time from an application perspective, that is survival time is seen to be relevant for the full end-to-end network path between the message sender and receiver.

For example, support of survival time which is one example for an essential parameter to support the newly emerging services with wireless communications is improved allowing that the survival time is considered from an E2E point of view rather than only for a single link.

That is, according to examples of embodiments, while currently (in 3GPP) parameters like the survival time are only considered for each link individually, and especially for the radio link (i.e. UE-gNB) which is normally the weakest link, it is now proposed to consider the end-to-end path and to define thus a parameter which is related to E2E, i.e. a parameter such as a E2E related survival time.

For this purpose, according to examples of embodiments, a procedure is proposed where nodes (e.g. each user plane node) on the path (i.e. the communication elements or functions, such as gNBs, UPF and UEs as shown in Fig. 1, for example) are enabled to notify other nodes on the path (previous ones and/or subsequent ones, with regard to the corresponding traffic flow), or an external central processing element which is not directly involved in the communication but which may provide information to other parts of the communication path, about issues detected to be present in the communication path, i.e. problems regarding a transmission of any data packet (i.e. error / loss).

That is, according to examples of embodiments, a notification about a problem is sent to and considered by nodes located in both directions of the path(s) (e.g. from UE1 to UE2 as well as from UE2 to UE1). In this connection, it is to be noted that parameters like the survival time may also be applied to a "loop", i.e. to a potential first message and the corresponding response message.

With the procedure discussed below in further detail, the network is enabled to "sum up" problems, such as packet errors occurring in the overall E2E path and is thus to ensure that an allowed survival time for the whole E2E path can be kept. This can be achieved, for example, by using measures allowing to increase the reliability of data delivery over specific link(s) of the communication path or over the whole communication path, such as, for example, setting a higher priority for data transmission concerning packets in a row where one or even multiple packets have already been lost.

According to some examples of embodiments, in order to allow end-to-end support for honoring application traffic flow survival time, e.g. in a 5G System, a (selective) notification from one node or element to another node or element in the communication path (i.e. downstream to upstream user plane elements, or from upstream to downstream) in case a packet is lost (or delayed) e.g. in a downstream element or function on the way towards the destination is introduced.

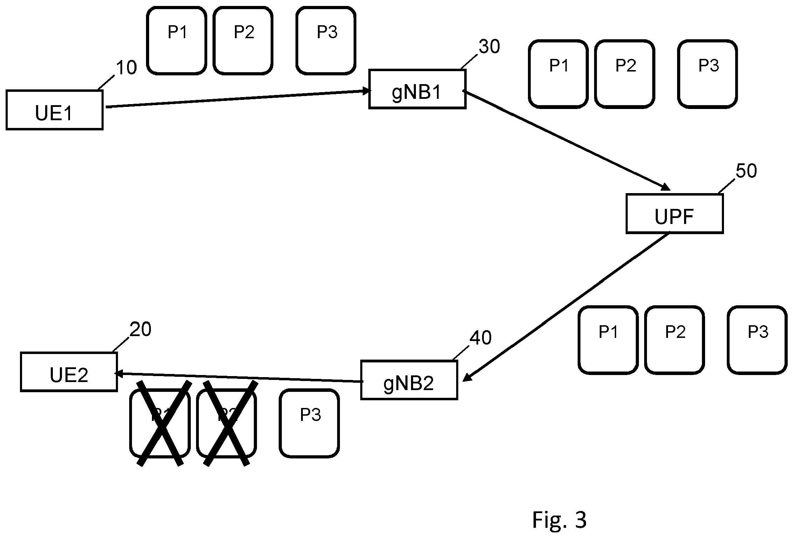

With reference to Fig. 3, which illustrates a similar situation like that discussed in connection with Fig. 1, but in which the situation is changed as soon as the second packet P2 is not delivered to UE2 20, corresponding measures are explained in further detail.

Assuming that a communication path is to be established between UE1 10 and UE2 20. In the example illustrated in Fig. 3, which represents a 5GS, information about survival time requirements of the end-to-end traffic flow is given to each network element or function on the path, e.g. via network exposure API, TSN CNC, network management or by some other means.

For example, survival time is expressed in terms of time, in terms of number of packets, or in some other formulation describing what kind of packet loss against the target QoS parameters the application can be tolerated until an application layer failure is declared. It is to be noted that the traffic flow is expressed e.g. in terms of a packet filter (set of packet headers) and optionally ingress/egress to the 5GS (UE or UPF N6/port identifiers).

In the example shown in Fig. 3, like in Fig. 1, this path consists of UE-source → gNB-source → UPF(s) → gNB-destination → UE-destination, but this represents only one possibility. As apparent to those skilled in the art, other structures are possible. For example, in a configuration based on that shown in Fig. 3, there can be zero, one or several UPFs on the path. The case with zero UPF can occur for a UE-to-UE traffic flow where zero UPFs assume e.g. a "RAN shortcut" for the flow. Other examples for zero UPFs include e.g. a case of direct communication between UEs, like in V2X relays or direct V2V communication, where a UE out of coverage of a gNB can use Sidelink to a relaying UE that forwards the packet on Uu to a gNB. Another example scenario is e.g. a wireless backhaul of the gNB.

Other examples of paths being established in which examples of embodiments can be applied comprise, for example, UE-source → gNB-source → [UPFs], where there can be one or more UPFs on the path. This example is for a UE-to-network traffic flow. Another example is e.g. [UPFs] → gNB-destination → UE-destination, in which a network-to-UE traffic flow is established.

The user plane elements or functions on the path (in the example of Fig. 3 these are the UEs, the gNBs and the UPF) is provided with a policy setting defining under which conditions a report (i.e. a notification) towards one or more other network elements or functions is to be sent in order to initiate measures allowing to enhance the reliability of the data transmission. For example, according to some examples of embodiments, an indication of the survival time requirement of the flow is provided. In the policy being set, information regarding when the notification is to be sent and to which receivers (user plane elements) (upstream and/or downstream) the notification is to be provided. That is, it is defined when and to whom a problem, e.g. failure to deliver a packet according to the QoS requirement with the flow potentially affecting the survival time requirement in the E2E sense is to be notified.

It is to be noted that, according to some examples of embodiments, the configuration also includes information necessary to carry the notification to the correct upstream or downstream elements and to identify the correct traffic flow to these elements. The details depend on the type of the element pair in question (gNB, UPF, UE), which is explained below in further detail.

When a user plane element detects an issue with a packet (e.g. loss or delay) on the flow matching the policy configured as described above, it will send a notification about the problem to(wards) upstream (and/or downstream) elements interested in this information. Specifically, in the example illustrated in Fig. 3, when the gNB2 40 detects that the second packet P2 is not delivered to UE2 20, it sends, according to the policy setting indicating e.g. a survival time of 2 consecutive packets, a notification to upstream user plane elements, i.e. to UPF 50, gNB1 30 and UE1 10.

It is to be noted that there are different ways how the notification is carried from the sender to the receiver. In the case of Fig. 3, where the notification is to be sent upstream, this depends on the corresponding pair of sender-receiver (i.e. on the elements forming the (next) hop). Furthermore, the notification can be sent e.g. via user plane or control plane signaling. It is also to be considered whether the notification is sent directly or via some intermediary element or a central processing element distributing the notification to the receiver(s).

According to some examples of embodiments, the notification is sent only about issues explicitly caused by the element sending the notification, i.e. when the link with which the sender (here gNB2 20) is connected to the next element causes a failure. Alternatively or additionally, the notification is sent also about issues detected on packets even prior to the arrival to the sending element. For instance, an element can detect and send a notification about a missing (lost) packet in a periodic sequence of packets even if the node itself is not responsible for its loss.

According to examples of embodiments, the notification carries information for the receiver side so as to be able to map the notification (i.e. the problem indication) to the correct traffic flow. For example, as an identification, the notification contains an indication of the packet filter matching the flow in question.

Moreover, according to examples of embodiments, the notification carries information about which exact packets have been compromised (i.e. P1, P2 in the example of Fig. 3). This is achieved, for example, by using sequence numbers.

Upon receiving a notification from a downstream user plane element, the upstream user plane element (in the example of Fig. 3, UPF 50 and gNB1 30) processed the received notification and takes measures so as to increase the reliability of the communication connection. Furthermore, according to examples of embodiments, the receiving element adds information derived from the notification (e.g. that one or two packets were lost) to loss/delay information about the traffic flow which is detected by the receiver itself. That is, the receiving network element or function takes information regarding problems on the communication path received from another element into account when comparing flow survival time requirement to the actual flow traffic delivery.

For instance, a user plane element may have local knowledge that a packet N (e.g. packet P2) in a flow has been delayed (on the local link, e.g. from gNB1 30 to UPF 50). In addition to this, it gets a notification from downstream that also packet N-1 (e.g. packet P1) has been delayed towards the endpoint (i.e. UE2 20). In case the survival time requirement for the flow dictates that only two consecutive packets can be lost, the user plane element knows that packet N+1 (i.e. packet P3) must be given high priority.

As indicated above, user plane elements to be considered are in particular elements or functions located at a radio link, such as gNBs, as they are controlling the radio links which are most likely to lose/delay packets. However, the principle indicted above can be applied also to other elements or functions, such as UPFs and UEs.

It is to be noted that, while the above described examples of embodiments are related to a case where as a criteria for sending the notification the survival time is used, also other types of criteria are usable. For example, independent from the knowledge or notion of the survival time, a user plane element such as a gNB can be configured such (i.e. has a policy setting) that it reacts to a predetermined number of packet losses or delays for a traffic flow (e.g. one packet loss) in a specific way even without explicitly considering a survival time.

Examples of embodiments apply also to a case where upstream/downstream elements or functions, e.g. corresponding user plane elements as indicated above, are provided with some sort of knowledge regarding losses or delays that have taken place further downstream, for example. Such knowledge is obtained, for example, via explicit signaled notifications between the user plane entities (e.g. using GTP-U or Xn), configured reception windows for the traffic flow, or by means of a notification within the GTP-U data packet belonging to the same data flow.

As a result, as indicated in Fig. 3, communication reliability is improved over the whole communication path so that packet P3 is sent timely from UE1 10 via gNB1, UPF and gNB2 to UE2 20 (as indicated by the solid box for P3 in Fig. 3).

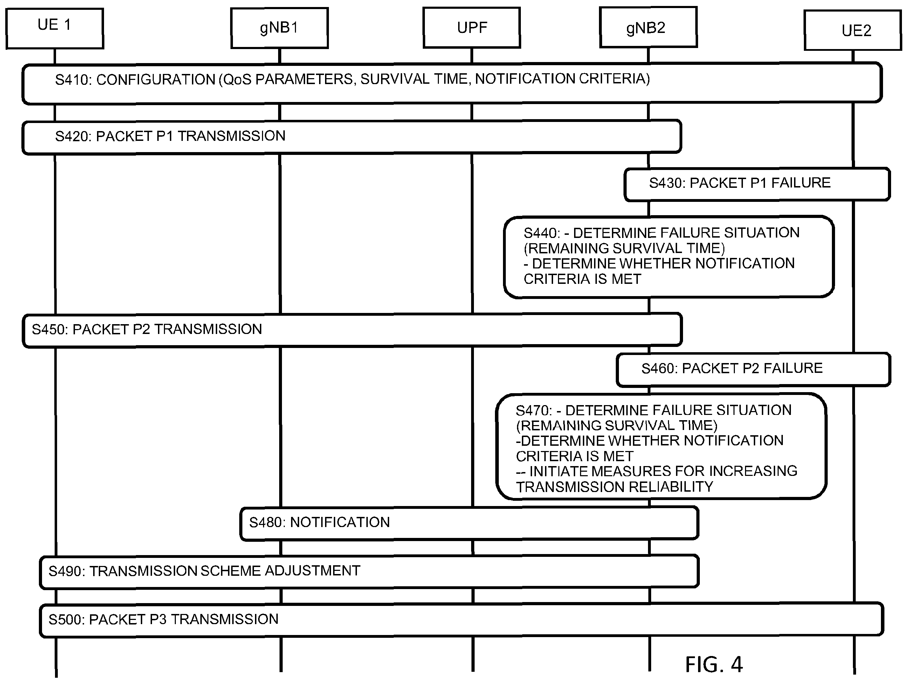

Fig. 4 shows a signaling diagram illustrating a procedure for communication control according to some examples of embodiments. Specifically, in Fig. 4, a signaling conducted between elements as illustrated in connection with Fig. 3 is explained in which an E2E survival time support is provided. In the example described in Fig. 4, again after two packets are lost, the sending element (e.g. the gNB2 40) sends the notification.

In S410, service/application related QoS parameters are notified/configured in all relevant nodes along the E2E communication path. Taking the communication example as shown in Fig. 3, the involved nodes include UE1, gNB1, UPF, gNB2, UE2.

A criteria for sending the notification to other elements (in the example considered in Fig. 3, it is assumed that the notification is to be sent upstream) is determined at all nodes, e.g. a number of failed packets within a certain time window, i.e. a survival time, or the like. In addition, as an option, it is determined which content the notification has, i.e. whether it carries, for example, a packet ID, a sequence ID, a stream ID, a source node ID etc.

In S420, the first packet (P1) is sent from UE1 to gNB2 without any error. However, in S430, the first packet P1 is not received correctly at UE2. This is detected by the gNB2, e.g. due to a missing ACK, or the like.

In S440, the gNB2 conducts a processing in which it determines whether the criteria for sending the notification regarding a failure to a receiver as indicated in the configuration is met. For example, in the example described in connection with Fig. 4, the remaining E2E survival time is determined by taking into account the required E2E survival time and the loss of the first packet. The gNB2 determines whether to send the notification based on the configured criteria. In the case of S440, it is determined that no feedback is to be sent.

S450 and S460 are comparable to S420 and S430 with regard to a second packet P2.

In S470, accordingly, the gNB2 conducts a processing in which it determines whether the criteria for sending the notification regarding a failure to a receiver as indicated in the configuration is met. Here, the remaining E2E survival time is determined by taking into account the required E2E survival time and the loss of two packets. The gNB2 determines now that it has to send the notification based on the configured criteria.

It is to be noted that, when it is determined that a notification is to be sent back, the gNB2 initiates measures allowing to increase the reliability of the transmission of the following packets.

In S480, gNB2 send the notification upstream, as indicated in the configuration, i.e. to gNB1 (via UPF).

In S490, gNB1, UPF and gNB2 take measures for increasing the transmission via the communication path. For example, the network elements adjust, triggered by the notification, a transmission scheme and/or resources along the communication path to increase the reliability of the transmission of the coming packet (P3).

In S500, the third packet P3 is successfully delivered from UE1 to UE2.

Thus, by means of using the notification being sent under specified circumstances (when certain criteria is met) considering the communication situation in the whole communication path between the endpoints of the communication, such as a E2E survival time, the transmission conditions can be adjusted so as to improve the reliability of the transmission of the further packets. Hence, as error caused by losing too many packets in a row (in the example discussed in Fig. 4 three consecutive packets) can be avoided and the application at UE2 is running normally without any break.

In the following, additional examples of embodiments are explained with reference to the configurations explained above.

According to some examples of embodiments, regarding criteria for deciding whether to send the notification to the indicated receiver(s) along the communication path (possible to the source node of the communication follow) (e.g. from gNB2 to gNB1 in the example shown in Fig. 3), such criteria can be configured to each individual user plane element and link separately. For example, in Fig. 3, the notification criteria representing a threshold for gNB2 can be after one or after two successive packet errors, depending e.g. on whether the node sending the notification suppose that gNB1 is able to still adjust the transmission/reception schemes for the third packet (P3).

Moreover, according to some examples of embodiments, the criteria can be set based on at least one of the following factors: survival time, traffic periodicity (i.e. which periodicity of data packet transmission is set), propagation delay between the nodes involved in the transmission (in particular between sender and receiver of notification, e.g. gNB1 and gNB2 in Fig. 3), radio resource availability, connectivity between serving nodes (for example, is the communication path for user plane data to be used, is a dedicated interface, e.g. an Xn association, available), and so on.

Moreover, according to some examples of embodiments, the content of the notification message can be adjusted according to requirements. For example, according to some examples of embodiments, a notification message includes the following information: ID of the sending user plane element (in the example of Fig. 3, gNB2), identification of the target user plane element(s) (in the example of Fig. 3, gNB1 and UPF), identification of the traffic flow (allowing to identify for which traffic flow measures are to be taken). It is to be noted that, depending on the specific deployment, it is possible that only selected elements are included in the notification message.

As a further option, the notification message can also include one or more of the following contents: identification of the exact packet or packets triggering the notification (in the example of Fig. 3, P2), status information about the source user plane element (in the example of Fig. 3, gNB2), status information about the traffic flow in question (e.g. periodicity or the like).

According to some examples of embodiments, the contents of the notification have to be mapped to protocols used for carrying the notifications between different types of elements.

For example, according to some examples of embodiments, since user plane connections are bidirectional, one alternative is to send the notification messages over the same user plane connections as those carrying the traffic flow (i.e. packets P1 to P3, for example) in the corresponding direction (for example in the reverse direction, i.e. upstream direction, in the example of Fig. 3. According to some examples of embodiments, the signaling can be done in a hop-by-hop manner with each hop doing mappings from one connection type (i.e. interface to be used for the next hop) to the next, until the final upstream user plane element is reached.

According to some examples of embodiments, several alternatives for sending the notification are possible.

For example, when assuming that the notification is to be transmitted between UPF to gNB or from gNB to UPF, or between UPFs, tunnel protocol based communication can be used. In case of 5GS, for example, the user plane is based on GTP-U protocol. The notification can be sent by a new GTP-U message within the tunnel (e.g. similar to end marker procedure) or outside the tunnel (e.g. similar to GTP-U Echo) or as a new field within the GTP-U message header.

According to some examples of embodiments, in case the traffic flow has a unique QFI, the identification of the traffic flow is done based on a combination of GTP Tunnel Endpoint ID (TEID) and QFI included in the GTP-U packet.

Furthermore, according to some examples of embodiments, in case multiple traffic flows are aggregated within a single QFI, a specific traffic flow can be identified at the UPF by including the upper layer packet headers (of the packet triggering the notification) into the notification. This can be used from elements like a gNB to elements like a UPF or between elements like UPFs, for example.

On the other hand, according to some examples of embodiments, when it is assumed that the notification is to be sent between elements like gNBs (e.g. between gNB1 and gNB2), the following can be used. For example, for a UE-to-UE traffic flow like that shown in Fig. 3, a scenario is considered where the notification is to be sent from the downstream gNB (i.e. gNB2) to the upstream gNB (i.e. gNB1). For example, in such as case, the notification is transmitted via a specific interface or the like, such as Xn interface between gNBs, or between other network nodes, e.g. UPFs.

In this case, according to some examples of embodiments, it is possible to pass the notification all the way from one gNB to another gNB in the reverse direction via the user plane. That is, the E2E survival time notification is forwarded in the user plane to the UPF. The UPF is responsible for mapping the correct PDU sessions carrying the traffic flow between the UEs. The traffic flow identification at the UPF can be done based on GTP-U level information (i.e. GTP-U TEID and QFI) and/or additional information the UPF can extract from PDU layer if the gNB forwards the upper layer headers of the data packet triggering the notification. It is to be noted that the notification process can be based on already standardized QoS monitoring between gNB and UPF by adding the possibility of the gNB triggering the procedure and the UPF switching between different PDU sessions to forward the indication to the downstream gNB. For example, a dedicated information element can be included in the header of GTP-U packets adding an indicator regarding the problem to be notified. It is to be noted that, according to some examples of embodiments, in case there are no data exchanges required (i.e. a notification is not necessary), a dummy packet can be sent to force the GTP-U exchange.

Moreover, according to some examples of embodiments, in addition to passing the notification via the user plane in reverse direction, other ways for sending the notification from one gNB to another gNB (in case of UE-to-UE traffic flows) are conceivable.

For example, a dedicated interface between network elements, such as an Xn interface between gNBs, can be employed. That is, when both gNBs have a Xn association already established, two options are possible.

In a first option, an Xn Control plane indication is used. That is, the notification is sent as a new XnAP message. Therefore, the signaling between both gNBs requires request/response messages (e.g. similar to Retrieve UE Context procedure) or only an indication message (e.g. similar to RAN paging procedure). The data stream identification may be done based on a combination of NG-RAN node UE XnAP ID reference, PDU Session ID, and QoS Flow ID (QFI) included in the signaling.

Another option is to use an Xn user plane indication. Here, the notification is sent as a new GTP-U message (e.g. similar to end marker procedure) or as a new field within the GTP-U message header. The identification of the data stream may be done based on a combination of GTP Tunnel Endpoint ID (TEID) and QFI included in the GTP-U packet.

It is to be noted that for the above options, according to some examples of embodiments, the gNBs require IDs provided by the network when establishing the user plane to map the feedback notifications to specific traffic flow(s) they are serving. That is, the gNBs may have allocated specific GTP-U or XnAP ID values or are able to map the two PDU sessions based on a combination of values (e.g. XnAP ID + PDU session ID) received in the feedback to manage the E2E survival time for the data stream between both gNBs, e.g. in addition to conventional values allocated when establishing the user plane path between the gNB and the UPF.

Another option to provide the notification from one gNB to another is to use another network element or function as a relay. For example, the notification can be forwarded by means of a core network function, such as AMF, by using e.g. N2 interface to the AMF (i.e. gNB2 → AMF → gNB1). In this case, the E2E survival time notification is forwarded in the control plane to the AMF. The AMF is responsible for forwarding the information between the gNBs transparently. To be able to do that, NGAP PDU Session management messages can be used adding a new field where the gNB2 could add the ID for gNB1 so that the AMF is able to forward the information to gNB1. Furthermore, a container for GTP-U information is provided. Thus, each gNB needs to know the other gNB ID that is serving the data stream (e.g. gNB2 needs to know gNB1 is serving the data stream X). When the feedback is received in the desired gNB (e.g. gNB1), the GTP-U information can be used to map the feedback to the corresponding data stream.

Furthermore, according to some examples of embodiments, the notification can also be sent from a UE to the network or the network to the UE.

That is, according to some examples of embodiments, the notification message can be sent from one UE toward another UE as well. Notification between UEs can be included in SDAP layer adding a specified notification bit within the SDAP header. For example, when the notification bit in the SDAP header is set to 0, no action is needed, when it is set to 1, the E2E survival time notification is triggered. The gNB reads the SDAP header and includes this notification within the signaling or data message sent to the UPF or destination gNB (depending on the alternative selected to forward E2E survival time notification as previously discussed. Then, upon reception of the notification at the destination gNB, the notification is included in the SDAP header to the destination UE changing the notification bit value to 1.

It is to be noted that, according to some examples of embodiments, the proposed concept is applicable also to a 5GS portion which acts as a TSN Bridge end-to-end from the UE port to another UE port or to a UPF port or native TSC scenarios.

Additionally, in case UE has the potential to change for example the transmission resource which can result in change in terms of overall reliability, for example involving Sidelink based communication, then notification between UEs can be used.

It is to be noted that according to some examples of embodiments the actually used way for sending the notifications depends on network configuration. For example, the way selected to send notifications depends on the PCF/SMF obtaining the E2E survival time for the data stream and deciding on the policies to apply to later forward the information to the user plane nodes involved. Based on the received information, the gNB(s)/UPF(s) are able to track and provide feedback when needed to avoid a violation of the survival time.

As indicated above, according to some examples of embodiments, it is possible to identify an exact packet where the problem to be notified occurred.

For example, according to some examples of embodiments, the notification only identifies a particular traffic stream. According to some further examples, it is also possible that the notification identifies exactly which packet(s) has (have) been lost or delayed. This is possible, for example, when packet or burst interval in the traffic stream is longer (e.g. 10 ms) than the latency of the notification (e.g.1 ms in a small network among gNBs and UPFs). Then, the receiver of the notification can identify that the notification is about the last packet it has itself forwarded. If the traffic flow on some level carries sequence numbers understandable by the user plane elements, they can be included in the notification. Examples include IEEE FRER / 802.1CB sequence numbers or any potential future sequence numbers added e.g. in the 5GS protocols carrying the packets.

According to some examples of embodiments, there are different options how a network element or functions reacts to the notification receipt.

For example, according to some examples of embodiments, based on the received feedback, all the involved elements can adjust the transmission schemes including resource, transmission format, transmission power, activation of duplication and so on to increase the overall reliability.

Furthermore, according to some examples of embodiments, temporal adjustment of the transmission schemes may be configured using different policies at the nodes. For example, a time window based approach can be used. Here, a time window is configured per individual link/node. Upon notification reception, the temporal adjustment is applied. Later, when the time window expires, the transmission scheme adjustment returns to the default configuration.

Alternatively, an event based approach can be used. Here, the temporal adjustment of the transmission scheme is (de)activated upon reception of an explicit indication (e.g. explicit notification from gNB2 to gNB1).

As another alternative, once a number of packets (the number is configurable, for example) is received correctly, the adjustment returns to the default configuration in an implicit way. Different ways to return to the default configuration can be configured beforehand as discussed above.

Furthermore, according to some examples of embodiments, the notification about lost packets are transferred not to all further nodes in the path. Instead, a central processing element or function can be informed about the notification.

Moreover, according to some example of embodiments, one of the endpoints is informed about the notification. This endpoint then handles the monitoring of the survival time.

Moreover, according to some examples of embodiments, when the notification is sent to the source of the traffic flow where the problem occurs (e.g. the UE1 in Fig. 3), the UE (i.e. the endpoint) is configured to request higher priority and/or reliability along the entire flow path. Alternatively, the previous packet is declared as lost, which e.g. resets a survival counter in gNB1.

According to some further examples of embodiments, a specified interface, such as the Xn interface can be used for sending the notification. According to some further examples of embodiments, the two gNBs learn that they need to communicate for this E2E QoS flow during setup of the E2E flow where all elements on the path are detected and configured to report the notification. For this, for example, a protocol for tracing the segments of the path can be used for identifying that e.g. two gNBs are involved.

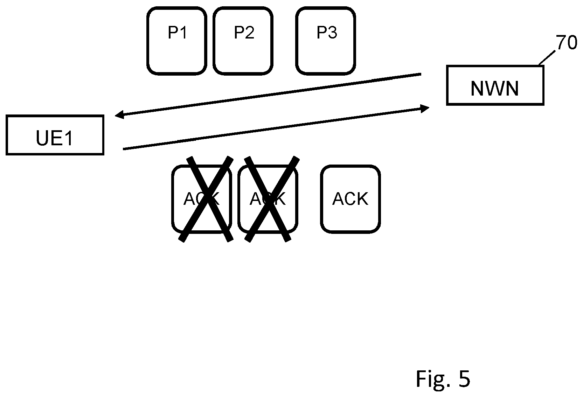

Besides UE-to-UE communication as illustrated in Fig. 3, according to some examples of embodiments, as also shown in Fig. 5, a closed loop control between a UE and a network-based endpoint is a scenario in which examples of embodiments are applicable.

Specifically, as shown in Fig. 5, a UE1 10 is communicating with the network (e.g. a server 70 or the like) wherein two links (one upstream from the UE to the network, one downstream from the network to the UE) are used for communication. There, one packet flow is sent from the UE to the network-based endpoint, while another is sent in the opposite direction. The loop thus traverses two radio links. While survival time is so far formally defined only for unidirectional flows, according to examples of embodiments, the two flows are considered in a combined manner, as consecutive packet losses on the whole loop can cause application layer failures.

For example, the network sends packets (P1 to P3) towards the UE. In response to the receipt of the packets, the UE sends an ACK message, for example. However, as shown in Fig. 5, it is assumed that the ACK signals responding to P1 and P2 are lost or delayed.

Thus, when it is determined that the ACK messages are not delivered, measures are taken for enhancing the transmission reliability wherein also the network-side node, informed about the failure, can take measures for enhancing the transmission reliability also on the link in the downstream direction so as to ensure that the next packet P3 is delivered so that the third ACK message can be triggered and thus correctly delivered, allowing to avoid an emergency case or application layer failure.

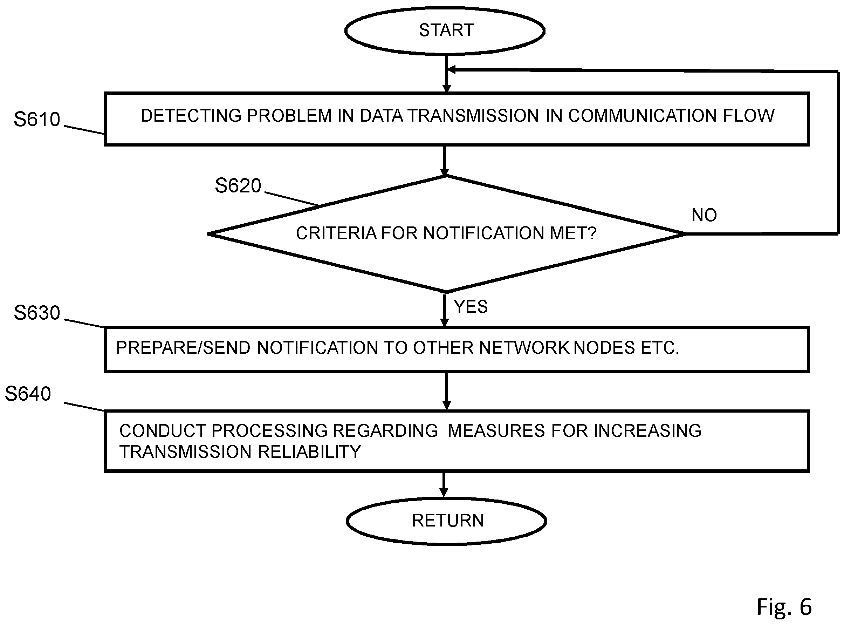

Fig. 6 shows a flow chart of a processing executed by a communication network element or function, such as gNB2 as described in the examples of Figs. 3 and 4. That is, Fig. 6 shows a flowchart related to a processing conducted by a communication network element or function, such as the gNB2, which controls a communication between two endpoints (e.g. UE1 and UE2), whereing at least two links are used in the communication path between the two endpoints. As also indicated above, the communication network may be based on a 3GPP standard. However, also other communication standards can be used, according to other examples of embodiments.

In S610, it is detected whether there is a problem in a data transmission via at least one of the links causing a packet loss in a communication flow towards one of the endpoints (upstream and/or downstream). For example, according to some examples of embodiments, it is detected whether there is a problem in the data transmission on the link between the own communication network element or function and at least one of the next network element or function being located upstream on the communication path and the next network element or function being located downstream of the communication path (as described e.g. in connection with Fig. 3, gNB2 -> UE2).

In S620, it is determined, in case a problem is detected in S610, whether criteria for triggering sending a notification to network elements or functions forming the communication path are met. This is based on a configuration setting as described, for example, in connection with S410 in Fig. 4.

For example, according to some examples of embodiments, as the criteria for triggering sending of the notification to network elements or functions forming the communication path, one or more of the following parameters can be used: a survival time of an application connected to the communication flow (that is, is there a possibility of a failure as described above), a traffic periodicity in the communication flow (that is, when is the next signaling to be expected, i.e. is there the possibility that the notification can be processed at the receiver side in a suitable manner), a propagation delay between network elements or functions of the communication path (that is, can the notification be received in due time, i.e. is there the possibility that the notification can be processed at the receiver side in a suitable manner), a radio resource availability on the communication path (that is, is it possible to transmit the notification, i.e. is there the possibility that the notification can be processed at the receiver side in a suitable manner), and a connectivity between the communication network element or function and the receiver (that is, is it possible to transmit the notification, i.e. is there the possibility that the notification can be processed at the receiver side in a suitable manner).

In case the determination in S620 is negative (NO), the processing returns to S610.

Otherwise, in case the determination is affirmative (YES), the process proceeds to S630 in which a notification regarding the problem is prepared and sent towards at least one receiver in the communication network. The receiver is at least one of a network element or function being located upstream of the communication flow where the problem is detected, a network element or function being located downstream of the communication flow where the problem is detected, wherein the problem is detected in the link towards the other direction. As another option, a central processing element or function can be set as the receiver.

According to some examples of embodiments, the notification includes an identification of the sending communication element or function (e.g. an ID of the gNB2), an identification of the receiver (e.g. gNB1), and an identification of the communication flow in which the problem is detected.

Furthermore, according to some examples of embodiments, the notification includes alos at least one of an identification of a packet for which the problem is detected, status information regarding the sending communication element or function, and status information regarding the communication flow in which the problem is detected.

According to some examples of embodiments, the notification is sent directly to the receiver. Alternative, the notification is forwarded to the receiver via at least one intermediate network element or function (e.g. via UPF in Fig. 3). Furthermore, according to an alternative, the notification is forwarded to the central processing element or function for delivering the notification to the receiver.

According to some examples of embodiments, the notification is sent to the receiver by using at least one of a user plane tunnel protocol (e.g. GTP-U), a user plane link used for transmission of the communication flow between the endpoints, a dedicated interface between communication network control elements or functions (e.g. Xn), or a control plane communication link between communication network control elements or functions.

In S640, a processing regarding measures for increasing the transmission reliability is conducted.

For example, according to some examples of embodiments, the network element or function sending the notification initiates own measures for increasing the reliability of data transmission via the communication path (as described, for example, in S490 of Fig. 4).

According to some further examples of embodiments, the processing of the communication network control element comprises also the following parts.

First, from at least one of a network element or function being located upstream of a communication flow to one of the endpoints, a network element or function being located downstream of a communication flow to one of the endpoints, and a central processing element or function, information, such as a notification regarding a problem in a data transmission via at least one of the links causing a packet loss in the communication flow towards one of the endpoints is received.

The received notification is processed. This processing is related to the processing in S610 (i.e. determination whether a problem is present), in S620 (i.e. determination whether the criteria for triggering sending the notification to other network element or functions is met), and in S640 (i.e. processing regarding measures for increasing reliability).

That is, according to examples of embodiments, it is determined, on the basis of a combination of information derived from the received notification and other information related to a problem in a data transmission via the communication path whether measures for increasing a reliability of data transmission via the communication path are to be initiated. Specifically, as other information usable for the combination, information identifying problems on the communication path being received earlier (e.g. for another packet) and stored in the network element can be used. Alternatively, local information can be used in the combination, such as information about the condition of a link (detected in S610, for example) or the network element or function). That is, information being present in the communication network element or function and information being received in the notification from the other network element or function are combined and used for determining whether measures for increasing the reliability are to be taken.

According to further examples of embodiments, information obtained from the notification being received are used in the determination whether the criteria for triggering sending a notification to network elements or functions forming the communication path are met.

For example, as described above, in case it is detected that packet P2 is delayed and an information is received that also packet P1 was delayed (on another link), the combination of the information pieces results in the above described problem related to the survival time.

According to some examples of embodiments, as measures for increasing the reliability of data transmission via the communication path, different measures can be considered. For example, one or more of the following measures can be taken: adjusting a transmission scheme used for the communication path, adjusting resources used for the communication path, adjusting a transmission power used for the communication path, and activating a duplication of a communication flow via the communication path.

Moreover, according to examples of embodiments, in connection with the measures to increase the reliability, it is possible to configure or set a time window per link or network element of function. The time window may be set such that it is valid after notification for initiating the measures for increasing the reliability of data transmission via the communication path, wherein after expiry of the time window the measures are deactivated. In this connection, it is checked, when the measures are initiated, whether an event is detected allowing to deactivate the measures.

According to examples of embodiments, the communication path is one of a loop between a first network element or function and a second network element or function (as e.g. illustrated in Fig. 5), and a sequence of a plurality of network elements or functions (as e.g. illustrated in Fig. 3). The communication network element or function conducting the method according to Fig. 6 is located in one of the first, second or plurality of network elements or functions.

For example, the communication network element or function includes one of a core network control element or function of the communication network (e.g. an UPF or the like), an access network control element or function of the communication network (e.g. gNB2), and a user equipment connected to the communication network (e.g. UE2). The receiver includes at least one of a core network control element or function of the communication network (e.g. UPF), an access network control element or function of the communication network (e.g. gNB1), and a user equipment connected to the communication network (e.g. UE1).

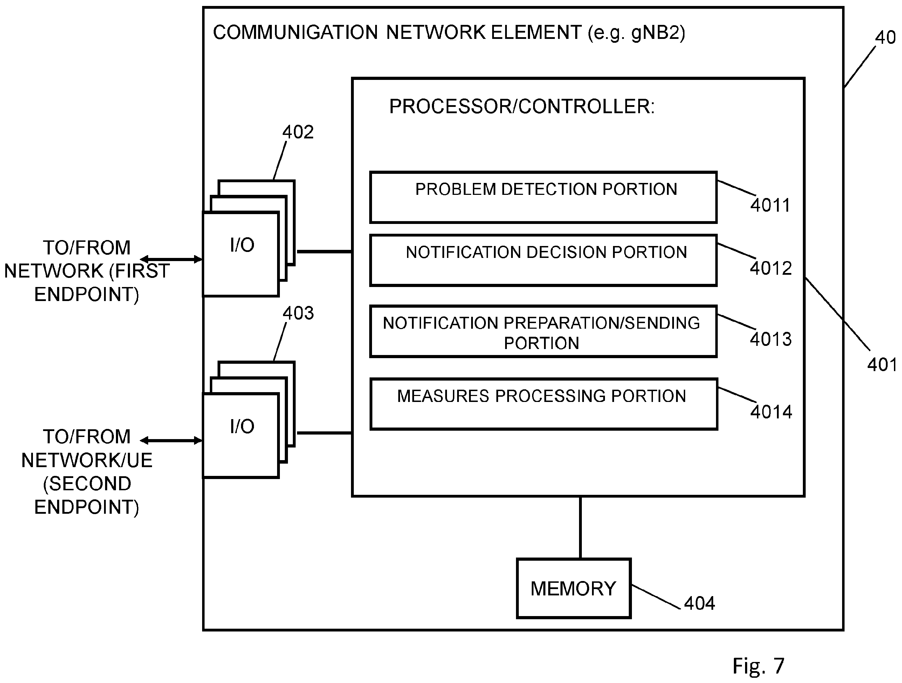

Fig. 7 shows a diagram of a communication network element or function acting as a control element of function, such as gNB2 40 according to some examples of embodiments, as described in connection with Figs. 3 and 4, which is configured to conduct a control processing for improving reliability of communication between endpoints according to examples of embodiments of the disclosure. It is to be noted that the network element or function, like the gNB (or UPF), may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The network element or function 40 shown in Fig. 7 may include a processing circuitry, a processing function, a control unit or a processor 401, such as a CPU or the like, which is suitable for executing instructions given by programs or the like related to the control procedure. The processor 401 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 402 and 403 denote input/output (I/O) units or functions (interfaces) connected to the processor or processing function 401. The I/O units 402 may be used for communicating with network parts located on the communication path towards a first endpoint (e.g. UE1) (via corresponding network elements like UPF, as shown in Fig. 3, for example). The I/O units 403 may be used for communicating with network parts located on the communication path towards a second endpoint (e.g. UE2) (via corresponding network elements like UPF, for example). The I/O units 402 and 403 may be combined units including communication equipment towards several entities, or may include a distributed structure with a plurality of different interfaces for different entities. Reference sign 404 denotes a memory usable, for example, for storing data and programs to be executed by the processor or processing function 401 and/or as a working storage of the processor or processing function 401. It is to be noted that the memory 404 may be implemented by using one or more memory portions of the same or different type of memory.

The processor or processing function 401 is configured to execute processing related to the above described control processing. In particular, the processor or processing circuitry or function 401 includes one or more of the following sub-portions. Sub-portion 4011 is a processing portion which is usable as a portion for detecting a problem on the communication path. The portion 4011 may be configured to perform processing according to S610 of Fig. 6. Furthermore, the processor or processing circuitry or function 401 may include a sub-portion 4012 usable as a portion for deciding on a notification. The portion 4012 may be configured to perform a processing according to S620 of Fig. 6. In addition, the processor or processing circuitry or function 401 may include a sub-portion 4013 usable as a portion for preparing and sending a notification. The portion 4013 may be configured to perform a processing according to S630 of Fig. 6. Furthermore, the processor or processing circuitry or function 401 may include a sub-portion 4014 usable as a portion for a processing related to measures for increasing reliability. The portion 4014 may be configured to perform a processing according to S640 of Fig. 6.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

According to a further example of embodiments, there is provided, for example, an apparatus for use by a communication network element or function configured to control a communication, in a communication network, between two endpoints in which at least two links are used between network elements or functions forming a communication path between the two endpoints, the apparatus comprising means configured to detect whether there is a problem in a data transmission via at least one of the links causing a packet loss in a communication flow towards one of the endpoints, means configured to determine, in case a problem is detected, on the basis of a configuration setting, whether criteria for triggering sending a notification to network elements or functions forming the communication path are met, and in case the determination is affirmative, means configured to prepare and send a notification regarding the problem towards at least one receiver in the communication network, wherein the receiver is at least one of a network element or function being located upstream of the communication flow where the problem is detected, a network element or function being located downstream of the communication flow where the problem is detected, and a central processing element or function.

Furthermore, according to some other examples of embodiments, the above defined apparatus may further comprise means for conducting at least one of the processing defined in the above described methods, for example a method according to that described in connection with Fig 6.

According to a further example of embodiments, there is provided, for example, a non-transitory computer readable medium comprising program instructions for causing an apparatus to perform, when conducting a control processing for a communication network element or function configured to control a communication, in a communication network, between two endpoints in which at least two links are used between network elements or functions forming a communication path between the two endpoints, detecting whether there is a problem in a data transmission via at least one of the links causing a packet loss in a communication flow towards one of the endpoints, determining, in case a problem is detected, on the basis of a configuration setting, whether criteria for triggering sending a notification to network elements or functions forming the communication path are met, and in case the determination is affirmative, preparing and sending a notification regarding the problem towards at least one receiver in the communication network, wherein the receiver is at least one of a network element or function being located upstream of the communication flow where the problem is detected, a network element or function being located downstream of the communication flow where the problem is detected, and a central processing element or function.

As described above, according to some examples of embodiments, a control mechanism is proposed in which the survival time (e.g. expressed as the maximum number of consecutive packet errors) is extended to E2E path, not only for each link individually. That is, the end-to-end path is associated to an E2E survival time. For this, it is proposed that one or more nodes (e.g. each node) on the path is enabled to notify further nodes (or a central control entity) about problems with data packet transmission (i.e. error / loss). Then, the network is enabled to sum up all packet errors occurring in the overall E2E path so as to be able to ensure that an allowed survival time for the whole E2E path can be kept.

For example, when considering a communication is between two UEs, and there are two or more radio links that are equally relevant for the whole traffic flow, all radio links can be taken into account with regard to the survival time to be considered. For example, the first (upstream) radio link (serving the traffic flow uplink) can be made aware of losses/failures occurring on the second link (serving the same traffic flow downlink), so that it can be determined if there is a threat of exceeding the survival time because of the losses on the second link. It is to be noted that a packet loss can happen also on links other than a radio link, i.e. basically over any link/node on the traffic flow's path through the 5GS, including GTP tunnels and UPFs. Therefore, according to examples of embodiments, basically each node (upstream and/or downstream nodes) can be made aware of the losses on one link. Hence, the network can (try to) honour survival time throughout.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. A method for use in a communication network element or function configured to control a communication, in a communication network, between two endpoints in which at least two links are used between network elements or functions forming a communication path between the two endpoints, the method comprising:
detecting whether there is a problem in a data transmission via at least one of the links causing a packet loss in a communication flow towards one of the endpoints;
determining, in case a problem is detected, on the basis of a configuration setting, whether criteria for triggering sending a notification to network elements or functions forming the communication path are met, wherein a survival time of an application connected to the communication flow is used as criteria for triggering sending of the notification, the survival time indicating a time available to recover from failure; and
in case the determination is affirmative, preparing and sending a notification regarding the problem towards at least one receiver in the communication network, wherein the receiver is at least one of: a network element or function located upstream of the communication flow where the problem is detected, a network element or function located downstream of the communication flow where the problem is detected, and a central processing element or function.

2. The method according to claim 1, further comprising
receiving, from at least one of a network element or function being located upstream of a communication flow to one of the endpoints, a network element or function being located downstream of a communication flow to one of the endpoints, and a central processing element or function, a notification regarding a problem in a data transmission via at least one of the links causing a packet loss in the communication flow towards one of the endpoints,
processing the received notification, and
determining, on the basis of a combination of information derived from the received notification and other information related to a problem in a data transmission via the communication path whether measures for increasing a reliability of data transmission via the communication path are to be initiated.

3. The method according to claim 1 or 2, further comprising
initiating measures for increasing reliability of data transmission via the communication path.

4. The method according to any of claims 1 to 3, wherein as criteria for triggering sending of the notification to network elements or functions forming the communication path, at least one of the following is further used:
a traffic periodicity in the communication flow,
a propagation delay between network elements or functions of the communication path,
a radio resource availability on the communication path, and
a connectivity between the communication network element or function and the receiver.

5. The method according to claim 3, further comprising
conducting, as measures for increasing the reliability of data transmission via the communication path, at least one of:
adjusting a transmission scheme used for the communication path,
adjusting resources used for the communication path,
adjusting a transmission power used for the communication path, and
activating a duplication of a communication flow via the communication path.

6. The method according to claim 5, further comprising:
configuring a time window per link or network element of function being valid after notification for initiating the measures for increasing the reliability of data transmission via the communication path, wherein after expiry of the time window the measures are deactivated, and
checking whether an event is detected allowing to deactivate the measures.

7. A communication network element or function configured to control a communication, in a communication network, between two endpoints in which at least two links are used between network elements or functions forming a communication path between the two endpoints, the communication network element or function comprising means for performing a method according to any of claims 1 to 6.

8. The method according to claim 1, further comprising:
receiving and processing, in a second communication network element or function located upstream or downstream to the first communication network element with regard to the communication flow where the problem is detected, the notification regarding the problem from the first communication network element or function, and
initiating, in the second communication network element or function, measures for increasing a reliability of data transmission via the communication path.

9. The method according to claim 8, further comprising
receiving, in the first communication network element or function, from at least one of a network element or function being located upstream of a communication flow to one of the endpoints, a network element or function being located downstream of a communication flow to one of the endpoints, and a central processing element or function, a notification regarding a problem in a data transmission via at least one of the links causing a packet loss in the communication flow towards one of the endpoints,
processing, in the first communication network element or function, the received notification, and
determining, in the first communication network element or function, on the basis of a combination of information derived from the received notification and other information related to a problem in a data transmission via the communication path whether measures for increasing a reliability of data transmission via the communication path are to be initiated.

10. The method according to claim 8 or 9, further comprising
initiating, in the first communication network element or function, measures for increasing reliability of data transmission via the communication path.

11. The method according to any of claims 8 to 10, wherein , in the first communication network element or function, as criteria for triggering sending of the notification to network elements or functions forming the communication path, at least one of the following is further used:
a traffic periodicity in the communication flow,
a propagation delay between network elements or functions of the communication path,
a radio resource availability on the communication path, and
a connectivity between the first communication network element or function and the receiver.

12. The method according to claim 10, further comprising
conducting, in the first and second communication network elements or functions, as measures for increasing the reliability of data transmission via the communication path, at least one of:
adjusting a transmission scheme used for the communication path,
adjusting resources used for the communication path,
adjusting a transmission power used for the communication path, and
activating a duplication of a communication flow via the communication path.

13. The method according to claim 12, further comprising:
configuring, in the first and second communication network elements or functions, a time window per link or network element of function being valid after notification for initiating the measures for increasing the reliability of data transmission via the communication path, wherein after expiry of the time window the measures are deactivated, and
checking whether an event is detected allowing to deactivate the measures.

14. A system conducting a communication, in a communication network, between two endpoints in which at least two links are used between network elements or functions forming a communication path between the two endpoints, the system comprising a first communication network element or function and a second communication network element or function, wherein the first communication network element or function and the second communication network element or function comprise means for performing the respective steps of a method according to any of claims 8 to 13.

15. A computer program comprising instructions which, when the program is executed by a computer, cause the computer to perform the steps of a method according to any of claims 1 to 6 or any of claims 8 to 13.

## Patentansprüche

1. Verfahren zur Verwendung in einem Kommunikationsnetzwerkelement oder einer Funktion, das/die konfiguriert ist, eine Kommunikation in einem Kommunikationsnetzwerk zwischen zwei Endpunkten zu steuern, wobei mindestens zwei Verbindungen zwischen Netzwerkelementen oder Funktionen verwendet werden, die einen Kommunikationspfad zwischen den zwei Endpunkten bilden, wobei das Verfahren umfasst:
Erkennen, ob ein Problem in einer Datenübertragung über mindestens eine der Verbindungen vorliegt, das einen Paketverlust in einem Kommunikationsfluss zu einem der Endpunkte verursacht;
Bestimmen, falls ein Problem erkannt wird, auf der Grundlage einer Konfigurationseinstellung, ob Kriterien zum Auslösen des Sendens einer Benachrichtigung an Netzwerkelemente oder Funktionen, die den Kommunikationspfad bilden, erfüllt sind, wobei eine Überlebenszeit einer mit dem Kommunikationsfluss verbundenen Anwendung als Kriterium zum Auslösen des Sendens der Benachrichtigung verwendet wird, wobei die Überlebenszeit eine zur Wiederherstellung nach einem Ausfall verfügbare Zeit angibt; und
falls die Bestimmung affirmativ ist, Vorbereiten und Senden einer Benachrichtigung bezüglich des Problems an mindestens einen Empfänger im Kommunikationsnetzwerk, wobei der Empfänger mindestens eines ist von: einem Netzwerkelement oder einer Funktion, das/die stromaufwärts des Kommunikationsflusses angeordnet ist, wo das Problem erkannt wird, einem Netzwerkelement oder einer Funktion, das/die stromabwärts des Kommunikationsflusses angeordnet ist, wo das Problem erkannt wird, und einem zentralen Verarbeitungselement oder einer zentralen Verarbeitungsfunktion.

2. Verfahren nach Anspruch 1, ferner umfassend
Empfangen, von mindestens einem von einem Netzwerkelement oder einer Funktion, das/die stromaufwärts eines Kommunikationsflusses zu einem der Endpunkte angeordnet ist, einem Netzwerkelement oder einer Funktion, das/die stromabwärts eines Kommunikationsflusses zu einem der Endpunkte angeordnet ist, und einem zentralen Verarbeitungselement oder einer zentralen Verarbeitungsfunktion, einer Benachrichtigung bezüglich eines Problems in einer Datenübertragung über mindestens eine der Verbindungen, das einen Paketverlust im Kommunikationsfluss zu einem der Endpunkte verursacht,
Verarbeiten der empfangenen Benachrichtigung, und
Bestimmen, auf der Grundlage einer Kombination von aus der empfangenen Benachrichtigung abgeleiteten Informationen und anderen Informationen, die sich auf ein Problem in einer Datenübertragung über den Kommunikationspfad beziehen, ob Maßnahmen zur Erhöhung einer Zuverlässigkeit der Datenübertragung über den Kommunikationspfad eingeleitet werden sollen.

3. Verfahren nach Anspruch 1 oder 2, ferner umfassend
Einleiten von Maßnahmen zur Erhöhung der Zuverlässigkeit der Datenübertragung über den Kommunikationspfad.

4. Verfahren nach einem der Ansprüche 1 bis 3, wobei als Kriterien zum Auslösen des Sendens der Benachrichtigung an Netzwerkelemente oder Funktionen, die den Kommunikationspfad bilden, mindestens eines der folgenden ferner verwendet wird:
eine Verkehrsperiodizität im Kommunikationsfluss,
eine Ausbreitungsverzögerung zwischen Netzwerkelementen oder Funktionen des Kommunikationspfades,
eine Funkressourcenverfügbarkeit auf dem Kommunikationspfad, und
eine Konnektivität zwischen dem Kommunikationsnetzwerkelement oder der Funktion und dem Empfänger.

5. Verfahren nach Anspruch 3, ferner umfassend
Durchführen, als Maßnahmen zur Erhöhung der Zuverlässigkeit der Datenübertragung über den Kommunikationspfad, von mindestens einem von:
Anpassen eines für den Kommunikationspfad verwendeten Übertragungsschemas,
Anpassen von für den Kommunikationspfad verwendeten Ressourcen,
Anpassen einer für den Kommunikationspfad verwendeten Sendeleistung, und
Aktivieren einer Duplizierung eines Kommunikationsflusses über den Kommunikationspfad.

6. Verfahren nach Anspruch 5, ferner umfassend:
Konfigurieren eines Zeitfensters pro Verbindung oder Netzwerkelement oder Funktion, das nach der Benachrichtigung gültig ist, zum Einleiten der Maßnahmen zur Erhöhung der Zuverlässigkeit der Datenübertragung über den Kommunikationspfad, wobei nach Ablauf des Zeitfensters die Maßnahmen deaktiviert werden, und
Prüfen, ob ein Ereignis erkannt wird, das die Deaktivierung der Maßnahmen ermöglicht.

7. Kommunikationsnetzwerkelement oder Funktion, das/die konfiguriert ist, eine Kommunikation in einem Kommunikationsnetzwerk zwischen zwei Endpunkten zu steuern, wobei mindestens zwei Verbindungen zwischen Netzwerkelementen oder Funktionen verwendet werden, die einen Kommunikationspfad zwischen den zwei Endpunkten bilden, wobei das Kommunikationsnetzwerkelement oder die Funktion Mittel zum Ausführen eines Verfahrens nach einem der Ansprüche 1 bis 6 umfasst.

8. Verfahren nach Anspruch 1, ferner umfassend:
Empfangen und Verarbeiten, in einem zweiten Kommunikationsnetzwerkelement oder einer zweiten Funktion, das/die stromaufwärts oder stromabwärts des ersten Kommunikationsnetzwerkelements bezüglich des Kommunikationsflusses angeordnet ist, wo das Problem erkannt wird, der Benachrichtigung bezüglich des Problems von dem ersten Kommunikationsnetzwerkelement oder der ersten Funktion, und
Einleiten, in dem zweiten Kommunikationsnetzwerkelement oder der zweiten Funktion, von Maßnahmen zur Erhöhung einer Zuverlässigkeit der Datenübertragung über den Kommunikationspfad.

9. Verfahren nach Anspruch 8, ferner umfassend
Empfangen, in dem ersten Kommunikationsnetzwerkelement oder der ersten Funktion, von mindestens einem von einem Netzwerkelement oder einer Funktion, das/die stromaufwärts eines Kommunikationsflusses zu einem der Endpunkte angeordnet ist, einem Netzwerkelement oder einer Funktion, das/die stromabwärts eines Kommunikationsflusses zu einem der Endpunkte angeordnet ist, und einem zentralen Verarbeitungselement oder einer zentralen Verarbeitungsfunktion, einer Benachrichtigung bezüglich eines Problems in einer Datenübertragung über mindestens eine der Verbindungen, das einen Paketverlust im Kommunikationsfluss zu einem der Endpunkte verursacht,
Verarbeiten, in dem ersten Kommunikationsnetzwerkelement oder der ersten Funktion, der empfangenen Benachrichtigung, und
Bestimmen, in dem ersten Kommunikationsnetzwerkelement oder der ersten Funktion, auf der Grundlage einer Kombination von aus der empfangenen Benachrichtigung abgeleiteten Informationen und anderen Informationen, die sich auf ein Problem in einer Datenübertragung über den Kommunikationspfad beziehen, ob Maßnahmen zur Erhöhung einer Zuverlässigkeit der Datenübertragung über den Kommunikationspfad eingeleitet werden sollen.

10. Verfahren nach Anspruch 8 oder 9, ferner umfassend
Einleiten, in dem ersten Kommunikationsnetzwerkelement oder der ersten Funktion, von Maßnahmen zur Erhöhung der Zuverlässigkeit der Datenübertragung über den Kommunikationspfad.

11. Verfahren nach einem der Ansprüche 8 bis 10, wobei in dem ersten Kommunikationsnetzwerkelement oder der ersten Funktion als Kriterien zum Auslösen des Sendens der Benachrichtigung an Netzwerkelemente oder Funktionen, die den Kommunikationspfad bilden, mindestens eines der folgenden ferner verwendet wird:
eine Verkehrsperiodizität im Kommunikationsfluss,
eine Ausbreitungsverzögerung zwischen Netzwerkelementen oder Funktionen des Kommunikationspfades,
eine Funkressourcenverfügbarkeit auf dem Kommunikationspfad, und
eine Konnektivität zwischen dem ersten Kommunikationsnetzwerkelement oder der ersten Funktion und dem Empfänger.

12. Verfahren nach Anspruch 10, ferner umfassend
Durchführen, in dem ersten und zweiten Kommunikationsnetzwerkelement oder den ersten und zweiten Funktionen, als Maßnahmen zur Erhöhung der Zuverlässigkeit der Datenübertragung über den Kommunikationspfad, von mindestens einem von:
Anpassen eines für den Kommunikationspfad verwendeten Übertragungsschemas,
Anpassen von für den Kommunikationspfad verwendeten Ressourcen,
Anpassen einer für den Kommunikationspfad verwendeten Sendeleistung, und
Aktivieren einer Duplizierung eines Kommunikationsflusses über den Kommunikationspfad.

13. Verfahren nach Anspruch 12, ferner umfassend:
Konfigurieren, in dem ersten und zweiten Kommunikationsnetzwerkelement oder den ersten und zweiten Funktionen, eines Zeitfensters pro Verbindung oder Netzwerkelement oder Funktion, das nach der Benachrichtigung gültig ist, zum Einleiten der Maßnahmen zur Erhöhung der Zuverlässigkeit der Datenübertragung über den Kommunikationspfad, wobei nach Ablauf des Zeitfensters die Maßnahmen deaktiviert werden, und
Prüfen, ob ein Ereignis erkannt wird, das die Deaktivierung der Maßnahmen ermöglicht.

14. System, das eine Kommunikation in einem Kommunikationsnetzwerk zwischen zwei Endpunkten durchführt, wobei mindestens zwei Verbindungen zwischen Netzwerkelementen oder Funktionen verwendet werden, die einen Kommunikationspfad zwischen den zwei Endpunkten bilden, wobei das System ein erstes Kommunikationsnetzwerkelement oder eine erste Funktion und ein zweites Kommunikationsnetzwerkelement oder eine zweite Funktion umfasst, wobei das erste Kommunikationsnetzwerkelement oder die erste Funktion und das zweite Kommunikationsnetzwerkelement oder die zweite Funktion Mittel zum Ausführen der jeweiligen Schritte eines Verfahrens nach einem der Ansprüche 8 bis 13 umfassen.

15. Computerprogramm, umfassend Anweisungen, die, wenn das Programm von einem Computer ausgeführt wird, den Computer veranlassen, die Schritte eines Verfahrens nach einem der Ansprüche 1 bis 6 oder einem der Ansprüche 8 bis 13 auszuführen.

## Revendications

1. Procédé destiné à être utilisé dans un élément de réseau de communication ou une fonction configuré(e) pour contrôler une communication, dans un réseau de communication, entre deux points d'extrémité dans lequel au moins deux liaisons sont utilisées entre des éléments de réseau ou des fonctions formant un chemin de communication entre les deux points d'extrémité, le procédé comprenant :
la détection de l'existence d'un problème dans une transmission de données via au moins l'une des liaisons causant une perte de paquet dans un flux de communication vers l'un des points d'extrémité ;
la détermination, dans le cas où un problème est détecté, sur la base d'un paramètre de configuration, de la satisfaction de critères pour déclencher l'envoi d'une notification à des éléments de réseau ou des fonctions formant le chemin de communication, dans lequel un temps de survie d'une application connectée au flux de communication est utilisé comme critère pour déclencher l'envoi de la notification, le temps de survie indiquant un temps disponible pour récupérer d'une défaillance ; et
dans le cas où la détermination est affirmative, la préparation et l'envoi d'une notification concernant le problème vers au moins un récepteur dans le réseau de communication, dans lequel le récepteur est au moins l'un parmi : un élément de réseau ou une fonction situé(e) en amont du flux de communication là où le problème est détecté, un élément de réseau ou une fonction situé(e) en aval du flux de communication là où le problème est détecté, et un élément ou une fonction de traitement central(e).

2. Procédé selon la revendication 1, comprenant en outre
la réception, depuis au moins l'un parmi un élément de réseau ou une fonction situé(e) en amont d'un flux de communication vers l'un des points d'extrémité, un élément de réseau ou une fonction situé(e) en aval d'un flux de communication vers l'un des points d'extrémité, et un élément ou une fonction de traitement central(e), d'une notification concernant un problème dans une transmission de données via au moins l'une des liaisons causant une perte de paquet dans le flux de communication vers l'un des points d'extrémité,
le traitement de la notification reçue, et
la détermination, sur la base d'une combinaison d'informations dérivées de la notification reçue et d'autres informations relatives à un problème dans une transmission de données via le chemin de communication, de la nécessité d'initier des mesures pour augmenter une fiabilité de la transmission de données via le chemin de communication.

3. Procédé selon la revendication 1 ou 2, comprenant en outre
l'initiation de mesures pour augmenter la fiabilité de la transmission de données via le chemin de communication.

4. Procédé selon l'une quelconque des revendications 1 à 3, dans lequel, comme critères pour déclencher l'envoi de la notification à des éléments de réseau ou des fonctions formant le chemin de communication, au moins l'un des éléments suivants est en outre utilisé :
une périodicité de trafic dans le flux de communication,
un retard de propagation entre des éléments de réseau ou des fonctions du chemin de communication,
une disponibilité de ressources radio sur le chemin de communication, et
une connectivité entre l'élément de réseau de communication ou la fonction et le récepteur.

5. Procédé selon la revendication 3, comprenant en outre
la mise en œuvre, comme mesures pour augmenter la fiabilité de la transmission de données via le chemin de communication, d'au moins l'un parmi :
l'ajustement d'un schéma de transmission utilisé pour le chemin de communication,
l'ajustement de ressources utilisées pour le chemin de communication,
l'ajustement d'une puissance de transmission utilisée pour le chemin de communication, et
l'activation d'une duplication d'un flux de communication via le chemin de communication.

6. Procédé selon la revendication 5, comprenant en outre :
la configuration d'une fenêtre temporelle par liaison ou élément de réseau ou fonction étant valide après notification pour initier les mesures pour augmenter la fiabilité de la transmission de données via le chemin de communication, dans lequel après expiration de la fenêtre temporelle les mesures sont désactivées, et
la vérification de la détection d'un événement permettant de désactiver les mesures.

7. Élément de réseau de communication ou fonction configuré(e) pour contrôler une communication, dans un réseau de communication, entre deux points d'extrémité dans lequel au moins deux liaisons sont utilisées entre des éléments de réseau ou des fonctions formant un chemin de communication entre les deux points d'extrémité, l'élément de réseau de communication ou la fonction comprenant des moyens pour exécuter un procédé selon l'une quelconque des revendications 1 à 6.

8. Procédé selon la revendication 1, comprenant en outre :
la réception et le traitement, dans un second élément de réseau de communication ou une seconde fonction situé(e) en amont ou en aval du premier élément de réseau de communication par rapport au flux de communication là où le problème est détecté, de la notification concernant le problème provenant du premier élément de réseau de communication ou de la première fonction, et
l'initiation, dans le second élément de réseau de communication ou la seconde fonction, de mesures pour augmenter une fiabilité de la transmission de données via le chemin de communication.

9. Procédé selon la revendication 8, comprenant en outre
la réception, dans le premier élément de réseau de communication ou la première fonction, depuis au moins l'un parmi un élément de réseau ou une fonction situé(e) en amont d'un flux de communication vers l'un des points d'extrémité, un élément de réseau ou une fonction situé(e) en aval d'un flux de communication vers l'un des points d'extrémité, et un élément ou une fonction de traitement central(e), d'une notification concernant un problème dans une transmission de données via au moins l'une des liaisons causant une perte de paquet dans le flux de communication vers l'un des points d'extrémité,
le traitement, dans le premier élément de réseau de communication ou la première fonction, de la notification reçue, et
la détermination, dans le premier élément de réseau de communication ou la première fonction, sur la base d'une combinaison d'informations dérivées de la notification reçue et d'autres informations relatives à un problème dans une transmission de données via le chemin de communication, de la nécessité d'initier des mesures pour augmenter une fiabilité de la transmission de données via le chemin de communication.

10. Procédé selon la revendication 8 ou 9, comprenant en outre
l'initiation, dans le premier élément de réseau de communication ou la première fonction, de mesures pour augmenter la fiabilité de la transmission de données via le chemin de communication.

11. Procédé selon l'une quelconque des revendications 8 à 10, dans lequel, dans le premier élément de réseau de communication ou la première fonction, comme critères pour déclencher l'envoi de la notification à des éléments de réseau ou des fonctions formant le chemin de communication, au moins l'un des éléments suivants est en outre utilisé :
une périodicité de trafic dans le flux de communication,
un retard de propagation entre des éléments de réseau ou des fonctions du chemin de communication,
une disponibilité de ressources radio sur le chemin de communication, et
une connectivité entre le premier élément de réseau de communication ou la première fonction et le récepteur.

12. Procédé selon la revendication 10, comprenant en outre
la mise en œuvre, dans les premier et second éléments de réseau de communication ou fonctions, comme mesures pour augmenter la fiabilité de la transmission de données via le chemin de communication, d'au moins l'un parmi :
l'ajustement d'un schéma de transmission utilisé pour le chemin de communication,
l'ajustement de ressources utilisées pour le chemin de communication,
l'ajustement d'une puissance de transmission utilisée pour le chemin de communication, et
l'activation d'une duplication d'un flux de communication via le chemin de communication.

13. Procédé selon la revendication 12, comprenant en outre :
la configuration, dans les premier et second éléments de réseau de communication ou fonctions, d'une fenêtre temporelle par liaison ou élément de réseau ou fonction étant valide après notification pour initier les mesures pour augmenter la fiabilité de la transmission de données via le chemin de communication, dans lequel après expiration de la fenêtre temporelle les mesures sont désactivées, et
la vérification de la détection d'un événement permettant de désactiver les mesures.

14. Système conduisant une communication, dans un réseau de communication, entre deux points d'extrémité dans lequel au moins deux liaisons sont utilisées entre des éléments de réseau ou des fonctions formant un chemin de communication entre les deux points d'extrémité, le système comprenant un premier élément de réseau de communication ou une première fonction et un second élément de réseau de communication ou une seconde fonction, dans lequel le premier élément de réseau de communication ou la première fonction et le second élément de réseau de communication ou la seconde fonction comprennent des moyens pour exécuter les étapes respectives d'un procédé selon l'une quelconque des revendications 8 à 13.

15. Programme d'ordinateur comprenant des instructions qui, lorsque le programme est exécuté par un ordinateur, amènent l'ordinateur à exécuter les étapes d'un procédé selon l'une quelconque des revendications 1 à 6 ou l'une quelconque des revendications 8 à 13.
